# EUROPÄISCHE PATENTSCHRIFT

(11) **EP 1 511 954 B1**
(45) Veröffentlichungstag und Bekanntmachung des Hinweises auf die Patenterteilung: **11.01.2006**
(21) Anmeldenummer: 02764583.7
(22) Anmeldetag: 12.06.2002
(51) Int. Cl.: F16K 27/04

(54) **EINSCHRAUBVENTIL**
SCREW-IN VALVE
SOUPAPE A VISSER

(43) Veröffentlichungstag der Anmeldung: 09.03.2005
(73) Patentinhaber: FSP Fluid Systems Partners Holding AG, 6340 Baar (CH)
(72) Erfinder: ROCCA, Wolfgang, 76297 Stutensee (DE); VESELY, Frantisek, 54226 Horni Marsov 203 (CZ)
(74) Vertreter: Karrais, Martin
(86) Internationale Anmeldenummer: PCT/EP2002/006418
(87) Internationale Veröffentlichungsnummer: WO 2003/106872

(56) Entgegenhaltungen:
- AT-B- 397 135
- DE-A- 4 423 627
- US-A- 3 893 484
- US-A- 3 906 980
- US-A- 5 901 749
- US-A1- 2002 043 287
- US-B1- 6 182 697

## Beschreibung

Die Erfindung betrifft ein Einschraubventil mit einem Einschraubteil und mit einer zumindest zwei wechselseitig druckbelastbare Anschlußöffnungen aufweisenden Hülse, in der ein Ventilkolben axial verschiebbar gehalten ist zum Freigeben und Unterbrechen einer Strömungsverbindung zwischen den Anschlußöffnungen wobei die Hülse bezogen auf das Einschraubteil axial unverschieblich gelagert ist.

Ein Einschraubventil dieser Art ist aus der Druckschrift DE 4423627 bekannt.

Derartige Einschraubventile sind in vielfältiger Ausgestaltung bekannt, beispielsweise in Form von Wege-, Rückschlag- oder Überlastventilen. Die Steuerung der Ventile kann handbetätigt oder auch fremdkraftbetätigt erfolgen, beispielsweise mittels eines Elektromagneten.

Das Einschraubventil kann mittels des Einschraubteiles in ein Gehäuse beispielsweise eines Steuerblockes eingeschraubt werden, und durch axiale, d. h. in Längsrichtung der Hülse erfolgende Verschiebung des Ventilkolbens kann für ein Druckfluid, beispielsweise eine Hydraulikflüssigkeit oder Druckluft, eine Strömungsverbindung zwischen zwei Anschlußöffnungen der Hülse wahlweise freigegeben oder unterbrochen werden. Der in axiale Richtung bewegliche Kolben ist in der Hülse mit sehr geringem Spiel geführt, um die Leckage des Einschraubventils so gering wie mögtich zu halten. Es hat sich herausgestellt, daß die Beweglichkeit des Kolbens beeinträchtigt werden kann, wenn beim Einschrauben in das das Einschraubventil aufnehmende Gehäuse eine Fehlausrichtung des Einschraubteiles auftritt. Eine derartige Fehlausrichtung oder Verkantung des Einschraubteiles kann nicht in allen Fällen ausgeschlossen werden, da derartige Einschraubventile oft unter rauhen Umgebungsbedingungen innerhalb kurzer Zeit von fachfremden Personen eingeschraubt werden.

Aufgabe der vorliegenden Erfindung ist es, ein Einschraubventil der eingangs genannten Art derart weiterzubilden, daß die Gefahr einer Beeinträchtigung der Bewegung des Ventilkolbens beim Einschrauben des Einschraubteiles vermindert wird.

Diese Aufgabe wird bei einem Einschraubventil der gattungsgemäßen Art erfindungsgemäß dadurch gelöst, daß die Hülse senkrecht zur Einschraubrichtung des Einschraubteiles versetz- und/oder verschwenkbar gelagert ist.

In die Erfindung fließt der Gedanke mit ein, daß eine Beträchtigung der Bewegung des Ventilkolbens bei einer Fehlausrichtung oder Verkantung des Einschraubteiles dadurch vermindert werden kann, daß die Hülse senkrecht zur Einschraubrichtung versetz- und/oder verschwenkbar gelagert ist. Wird das Einschraubteil beim Einschrauben in ein korrespondierendes Gehäuse verkantet, so kann die somit vorliegende fehlerhafte Ausrichtung des Einschraubteiles durch eine Art "Gegenbewegung" der Hülse, nämlich eine Kipp-, Schwenk- oder Versatzbewegung senkrecht zu deren Längsachse, also mittels eines radialen Toleranzausgleiches, ausgeglichen werden.

In die Erfindung fließt außerdem der Gedanke mit ein, daß durch eine axial unverschiebliche Lagerung der Hülse sichergestellt werden kann, daß es beim Einsatz des Einschraubventiles nicht erforderlich ist, daß sich die Hülse im eingeschraubten Zustand des Einschraubventiles an einer Stützfläche des das Einschraubventil aufnehmenden Gehäuses abstützt. Eine derartige Stützfläche kann vielmehr entfallen, wobei jedoch die wechselseitige Druckbelastbarkeit der Hülse, also die axiale Druckbelastbarkeit der Hülse sowohl in Richtung auf das Einschraubteil als auch in die dem Einschraubteil abgewandte Richtung, aufrechterhalten bleibt. Dies ermöglicht insgesamt eine erheblich vereinfachte Montage des Einschraubventiles, denn selbst bei einer Fehlausrichtung oder bei einem Verkanten des Einschraubteiles wird die Beweglichkeit des Ventilkolbens nicht beeinträchtigt, wobei außerdem nicht sichergestellt werden muß, daß das Einschraubteil soweit in ein das Einschraubventil aufnehmendes Gehäuse eingeschraubt wird, daß die Hülse an einer korrespondierenden Stützfläche des Gehäuses zur Anlage kommt und somit in axialer Richtung abgestützt ist. Die Montage des Einschraubventiles kann folglich selbst von fachfremden Personal unter Zeitdruck vorgenommen werden.

Bei einer bevorzugten Ausführungsform des erfindungsgemäßen Einschraubventiles ist die Hülse über mindestens eine formschlüssige Verbindung mit dem Einschraubteil verbunden. Es hat sich gezeigt, daß mittels einer formschlüssigen Verbindung kostengünstig eine wechselseitig druckbelastbare Lagerung der Hülse sichergestellt werden kann, wobei die Hülse senkrecht zur Einschraubrichtung des Einschraubteiles versetz- und/oder verschwenkbar ist. Die Hülse kann folglich eine Kipp-, Taumel- oder Versatzbewegung ausführen, ohne daß ihre axiale Stellung bezogen auf das Einschraubteil verändert wird.

Vorzugsweise ist die Hülse unmittelbar mit dem Einschraubteil formschlüssig verbunden.

So kann beispielsweise vorgesehen sein, daß die Hülse über eine Bördelung mit dem Einschraubteil verbunden ist. Unter einer Bördelung wird hierbei eine Verformung des Einschraubteiles und/oder der Hülse quer zur Längsachse der Hülse verstanden, also eine Aufweitung oder Verengung, wobei durch die Verformung ein Formschluß zwischen Hülse und Einschraubteil erzielt wird.

Alternativ und/oder ergänzend kann vorgesehen sein, daß die Hülse über eine Sicherungsring- oder Sprengring-Verbindung mit dem Einschraubteil formschlüssig verbunden ist. So kann beispielsweise vorgesehen sein, daß das Einschraubteil eine Aufnahme ausbildet, in der ein Abschnitt der Hülse mit Spiel mittels eines Sicherungs- oder Sprengringes gehalten ist. Durch die Sicherstellung eines Spieles zwischen dem Abschnitt der Hülse und der Aufnahme des Einschraubteiles kann auf konstruktiv einfache Weise sichergestellt werden, daß die Hülse senkrecht zur Einschraubrichtung des Einschraubteiles versetzt und/oder verschwenkt werden kann. Mittels des Sicherungs- oder Sprengringes wird gleichzeitig gewährleistet, daß die in zwei einander entgegengesetzte Richtungen druckbelastbare Hülse axial unverschieblich am Einschraubteil gelagert ist.

Von Vorteil ist es, wenn die Hülse über mindestens ein Zwischenteil mit dem Einschraubteil verbunden ist. In vielen Fällen kann dadurch die Montage des Einschraubventiles vereinfacht werden.

So kann beispielsweise vorgesehen sein, daß die Hülse am Zwischenteil festgelegt ist, und daß das Zwischenteil formschlüssig mit dem Einschraubteil verbunden und bezogen auf das Einschraubteil axial unverschieblich und senkrecht zur Einschraubrichtung des Einschraubteiles versetz- und/oder verschwenkbar gelagert ist.

Die Festlegung der Hülse am Zwischenteil kann beispielsweise dadurch erfolgen, daß die Hülse mit dem Zwischenteil verschraubt ist.

Das Zwischenteil ist bei einer bevorzugten Ausführungsform der Erfindung über eine Bördelung mit dem Einschraubteil verbunden. Hierzu kann beispielsweise vorgesehen sein, daß das Zwischenteil in eine Aufnahme des Einschraubteiles eintaucht, wobei das Einschraubteil in Höhe der Aufnahme nach dem Einführen des Zwischenteiles quer zur Einführrichtung verformt ist und dadurch eine formschlüssige Verbindung zwischen Einschraubteil und Zwischenteil hergestellt ist. Alternativ und/oder ergänzend kann vorgesehen sein, daß ein in die Aufnahme des Einschraubteiles eintauchender Endabschnitt des Zwischenteiles radial nach außen verformt ist und dadurch in eine den aufgeweiteten Bereich des Endabschnittes aufnehmende Aufnahmenut des Einschraubteiles eintaucht. Durch die Bördelung ist sichergestellt, daß das Zwischenteil senkrecht zur Einschraubrichtung des Einschraubteiles versetzt und/oder verschwenkt werden kann, so daß bei einem Verkanten des Einschraubteiles eine Ausgleichsbewegung des Zwischenteiles und der an diesem festgelegten Hülse ermöglicht ist, um eine Beeinträchtigung der Bewegung des Ventilkolbens zu verhindern.

Wie bereits erläutert, zeichnet sich das erfindungsgemäße Einschraubventil unter anderem dadurch aus, daß die Hülse bezogen auf das Einschraubteil axial unverschieblich gelagert ist. Eine derartige Lagerung kann auf konstruktiv besonders einfache Weise dadurch sichergestellt werden, daß die Hülse mit dem Zwischenteil lösbar verbindbar - beispielsweise verschraubbar - ist, und daß das Einschraubteil einen Anschlag ausbildet, an dem das Zwischenteil axial unverschieblich gehalten ist.

Bei einer besonders bevorzugten Ausführungsform des erfindungsgemäßen Einschraubventiles ist die Hülse axial unverschieblich und senkrecht zur Einschraubrichtung des Einschraubteiles versetz- und/oder verschwenkbar am Zwischenteil gehalten und das Zwischenteil ist axial unverschieblich und senkrecht zur Einschraubrichtung des Einschraubteiles versetz- und/oder verschwenkbar am Einschraubteil gehalten. Dies ermöglicht es, bei einem Verkanten des Einschraubteiles dessen fehlerhafte Ausrichtung sowohl durch eine Verschwenk- oder Versatzbewegung des Zwischenteiles relativ zum Einschraubteil als auch durch eine Verschwenk- oder Versatzbewegung der Hülse relativ zum Zwischenteil auszugleichen. Somit sind nur verhältnismäßig geringe Relativbewegungen zwischen Hülse und Zwischenteil sowie zwischen Zwischenteil und Einschraubteil erforderlich um sicherzustellen, daß bei einer Fehlausrichtung des Einschraubteiles eine Beeinträchtigung der Bewegung des Ventilkolbens verhindert wird.

Günstig ist es, wenn das Zwischenteil eine Axialbohrung aufweist, in der ein Endbereich der Hülse mit radialem Spiel mittels eines Spreng- oder Sicherungsringes gehalten ist. Der Endbereich der Hülse ist schräg zur Längsachse der Axialbohrung des Zwischenteiles ausrichtbar, da der Endbereich der Hülse mit radialem Spiel von der Axialbohrung aufgenommen wird. Der Spreng- oder Sicherungsring gewährleistet, daß eine Bewegung der Hülse in axialer Richtung, also in Längsrichtung der Hülse, unterbunden ist.

Wie bereits erläutert, kann das Einschraubventil manuell betätigbar sein oder aber durch Fremdkraft.

Bei einer bevorzugten Ausführungsform ist vorgesehen, daß das Einschraubventil elektromagnetisch betätigbar ist. Hierzu umfaßt das Einschraubventil vorzugsweise eine elektromagnetische Betätigungseinheit mit einem Elektromagneten, der ein Polrohr umgibt, wobei das Polrohr das voranstehend erläuterte, mit der Hülse verbundene Zwischenteil ausbildet. Bei einer derartigen Ausführungsform ist die Hülse am Polrohr gehalten, und das Polrohr steht mit dem Einschraubteil in mechanischer Verbindung.

Es kann vorgesehen sein, daß das Polrohr einstückig mit dem Einschraubteil verbunden ist. Dies ermöglicht eine besonders kostengünstig herstellbare Ausgestaltung des erfindungsgemäßen Einschraubventiles.

Alternativ kann vorgesehen sein, daß das Polrohr mit dem Einschraubteil lösbar verbindbar, beispielsweise verschraubbar ist.

Zur elektromagnetischen Betätigung umfaßt das Einschraubventil vorzugsweise eine elektromagnetische Betätigungseinheit, die senkrecht zur Einschraubrichtung des Einschraubteiles versetzbar und/oder verschwenkbar ist. Dadurch kann eine Beeinträchtigung der Betätigung des Einschraubventiles bei einem Verklemmen oder Verkanten oder sonstigen Fehlorientierung des Einschraubteiles verhindert werden. So kann beispielsweise vorgesehen sein, daß die elektromagnetische Betätigungseinheit ein Polrohr aufweist, an dem ein Elektromagnet gehalten ist und das formschlüssig mit dem Einschraubteil verbunden und schräg oder senkrecht zur Einschraubrichtung des Einschraubteiles versetz- und/oder verschwenkbar ist. Das Polrohr nimmt üblicherweise einen Magnetanker auf, der bei Anregung des Elektromagneten in axialer Richtung verschiebbar ist zur Betätigung des Ventilkolbens. Das Polrohr bildet hierbei eine Führung für den Magnetanker, in welcher der Magnetanker gleitend gelagert ist. Das Polrohr kann bei einem Verkanten oder Verklemmen des Einschraubteiles senkrecht zur Einschraubrichtung versetzt und/oder verschwenkt werden, so daß die Bewegung des im Polrohr geführten Magnetankers durch ein Verkanten oder eine sonstige Fehlausrichtung des Einschraubteiles nicht beeinträchtigt wird.

Die nachfolgende Beschreibung bevorzugter Ausführungsformen der Erfindung dient im Zusammenhang mit der Zeichnung der näheren Erläuterung. Es zeigen:
- Figur 1:: eine Schnittansicht einer ersten Ausführungsform eines erfindungsgemäßen Einschraubventiles;
- Figur 2:: eine Seitenansicht in Richtung des Pfeiles A aus Figur 1;
- Figur 3:: eine Schnittansicht einer zweiten Ausführungsform eines erfindungsgemäßen Einschraubventiles;
- Figur 4:: eine Schnittansicht einer dritten Ausführungsform eines erfindungsgemäßen Einschraubventiles;
- Figur 5:: eine Schnittansicht einer vierten Ausführungsform eines erfindungsgemäßen Einschraubventiles;
- Figur 6:: eine Schnittansicht einer fünften Ausführungsform eines erfindungsgemäßen Einschraubventiles;
- Figur 7:: eine Schnittansicht einer sechsten Ausführungsform eines erfindungsgemäßen Einschraubventiles;
- Figur 8:: eine Schnittansicht einer siebten Ausführungsform eines erfindungs**gemäßen Einschraubventiles;**
- Figur 9:: eine Schnittansicht einer achten Ausführungsform eines erfindungsgemäßen Einschraubventiles;
- Figur 10:: eine Schnittansicht einer neunten Ausführungsform eines erfindungsgemäßen Einschraubventiles;

- Figur 11:: eine Schnittansicht einer zehnten Ausführungsform eines erfindungsgemäßen Einschraubventiles und
- Figur 12:: eine Schnittansicht einer elften Ausführungsform eines erfindungsgemäßen Einschraubventiles.

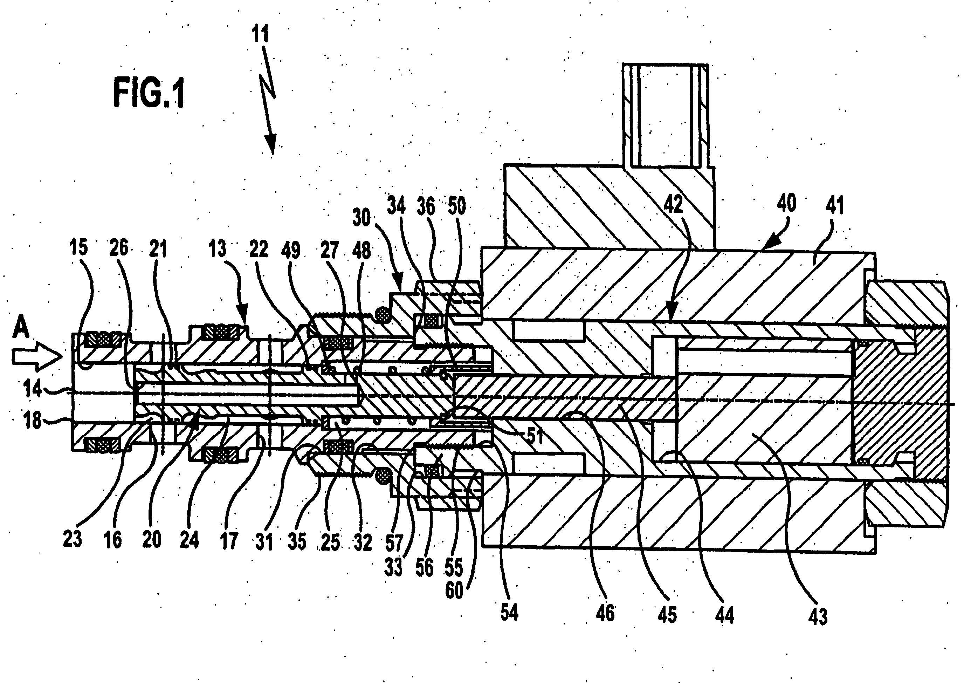

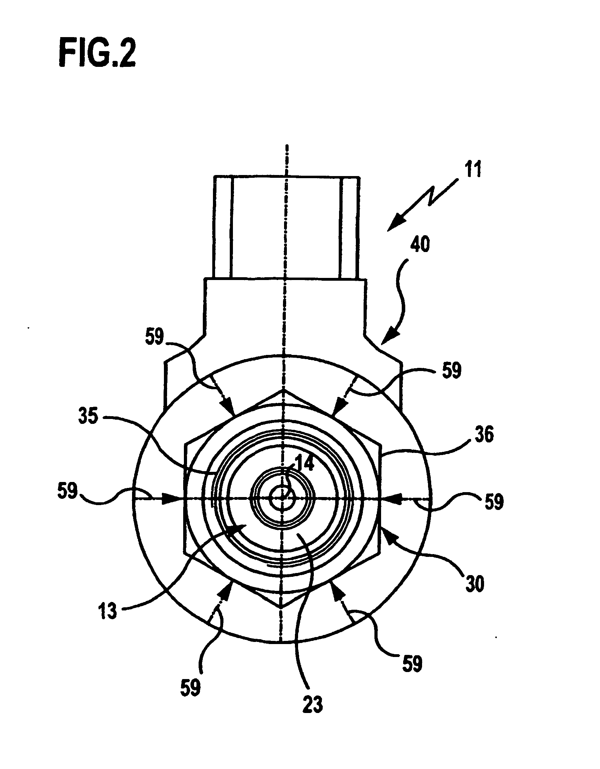

In den Figuren 1 und 2 ist in schematischer Darstellung eine erste Ausführungsform eines erfindungsgemäßen Einschraubventiles dargestellt, das insgesamt mit dem Bezugszeichen 11 belegt ist. Es ist als 3/2-Wegeventil ausgebildet und umfaßt hierzu eine Hülse 13 mit einer koaxial zur Längsachse 14 der Hülse 13 ausgerichteten Längsbohrung 15 und mit zwei parallelen, bezogen auf die Längsachse 14 im Abstand zueinander angeordneten Querbohrungen 16 und 17. Die Längsbohrung 15 definiert stirnseitig eine erste Anschlußöff nung 18 der Hülse 13, und die Querbohrungen 16 und 17 definieren im Umfangsbereich der Hülse 13 zweite und dritte Anschlußöffnungen.

In der Längsbohrung 15 der Hülse 13 ist ein Ventilkolben 20 axial, d. h. in Richtung der Längsachse 14 verschiebbar gehalten. Die Führung des Ventilkolbens 20 innerhalb der Längsbohrung 15 erfolgt mittels zweier im axialen Abstand zueinander angeordneter Führungsdichtglieder 21 und 22, die in die Längsbohrung 15 eingepaßt sind und jeweils einen fluiddicht an der Wandung der Längsbohrung 15 anliegenden Dichtring umfassen. Zwischen der Außenseite des Ventilkolbens 20 und der Wandung der Längsbohrung 15 sind drei ringförmige Zwischenräume ausgebildet in Form eines vorderen Strömungsraumes 23 im Bereich zwischen dem ersten Führungsdichtglied 21 und dem der ersten Anschlußöffnung 18 zugewandten vorderen Ende des Ventilkolbens 20, eines hinteren Strömungsraumes 24 in Höhe zwischen den beiden Führungsdichtgliedem 21 und 22 sowie eines Federraumes 25 zwischen dem zweiten Führungsdichtglied 22 und dem der ersten Anschlußöffnung 18 abgewandten hinteren Ende des Ventilkolbens 20.

Koaxial zur Längsachse 14 ausgerichtet weist der Ventilkolben 20 eine Sackbohrung 26 auf, die in die der ersten Anschlußöffnung 18 der Hülse 13 zugewandte vordere Stirnseite des Ventilkolbens 20 einmündet und von deren der ersten Anschlußöffnung 18 abgewandtem Endbereich eine Querbohrung 27 abzweigt, so daß die erste Anschlußöffnung 18 über die Sackbohrung 26 und die Querbohrung 27 mit dem Federraum 25 in Druckverbindung steht.

Das Einschraubventil 11 kann in ein an sich bekanntes und deshalb in der Zeichnung nicht dargestelltes Gehäuse, beispielsweise in das Gehäuse eines hydraulischen Steuerblockes, eingeschraubt werden. Hierzu umfaßt das Einschraubventil 11 ein Einschraubteil 30 mit einer stufig ausgestalteten Durchgangsbohrung 31, die einen der ersten Anschlußöffnung 18 der Hülse 13 zugewandten vorderen Bohrungsabschnitt 32 sowie einen der ersten Anschlußöffnung 18 abgewandten hinteren Bohrungsabschnitt 33 umfaßt, die über eine radial verlaufende Stufe 34 miteinander verbunden sind. In Höhe des vorderen Bohrungsabschnittes 32 trägt das Einschraubteil 30 ein Außengewinde 35, und in Höhe des hinteren Bohrungsabschnittes 33 ist das Einschraubteil 30 außenseitig als Sechskant 36 ausgestaltet.

Das Einschraubventil 11 ist elektromagnetisch betätigbar. Hierzu kommt eine elektromagnetische Betätigungseinheit 40 zum Einsatz mit einem Elektromagneten 41, der ein Polrohr 42 in Umfangsrichtung umgibt. Das Polrohr 42 nimmt einen Magnetanker 43 auf, der in einer zylinderförmigen Aufnahme 44 des Polrohrs 42 parallel zur Längsachse 14 der Hülse 13 verschieblich gehalten ist und durch Anregung des Elektromagneten in Richtung auf den Ventilkolben 20 verschoben werden kann.

Am Magnetanker 43 ist ein Stößel 45 festgelegt, der eine Durchgangsbohrung 46 des Polrohrs 42 durchgreift und mit seinem freien Ende an der der Anschlußöffnung 18 abgewandten hinteren Stirnseite des Ventilkolbens 20 anliegt.

Im Bereich des Federraumes 25 ist der Ventilkolben 20 von einer schraubenförmigen Rückstellfeder 48 umgeben, die zwischen einer Stützscheibe 49 und einem Stützkörper 50 eingespannt ist. Die Stützscheibe 49 stützt sich in axialer Richtung an einer radialen Erweiterung der Längsbohrung 15 ab, und der Stützkörper 50 ist mittels eines Sicherungsringes 51 in axialer Richtung unverschieblich am Ventilkolben 20 gehalten.

Wird der Elektromagnet 41 angeregt, so wird der Magnetanker 43 verschoben und dadurch über den Stößel 45 eine Betätigungskraft auf den Ventilkolben 20 ausgeübt, so daß sich dieser entgegen der Rückstellkraft der Rückstellfeder 48 aus seiner in Figur 1 dargestellten hinteren Stellung so weit nach vorne verschiebt, daß das erste Führungsdichtglied 21 im Bereich zwischen der ersten Anschlußöffnung 18 und der vorderen Querbohrung 16 an der Wandung der Längsbohrung 15 dicht anliegt. Dies hat zur Folge, daß die Strömungsverbindung zwischen der ersten Anschlußöffnung 18 und der vorderen Querbohrung 16 über den vorderen Strömungsraum 23 unterbrochen wird, während gleichzeitig die Strömungsverbindung zwischen der vorderen Querbohrung 16 und der hinteren Querbohrung 17 über den hinteren Strömungsraum 24 freigegeben wird. Entfällt die Anregung des Elektromagneten 41, so übt der Magnetanker 43 keine Betätigungskraft mehr aus und der Ventilkolben 20 wird unter der Wirkung der Rückstellfeder 48 in seine in Figur 1 dargestellte hintere Stellung zurückverschoben, wobei das erste Führungsdichtglied 21 die Strömungsverbindung zwischen den beiden Querbohrungen 16 und 17 unterbricht und stattdessen die Strömungsverbindung zwischen der ersten Anschlußöffnung 18 und der vorderen Querbohrung 16 freigibt.

Um sicherzustellen, daß die Verschiebebewegung des Ventilkolbens 20 nicht durch ein Verkanten oder Verklemmen oder eine sonstige Fehlausrichtung des Einschraubteiles 30 beim Einschrauben in ein zugeordnetes Gehäuse beeinträchtigt wird, ist die Hülse 13, in der der Ventilkolben 20 geführt ist, derart gelagert, daß sie senkrecht zur Einschraubrichtung des Einschraubteiles 30 versetzbar und/oder verschwenkbar ist, in axialer Richtung jedoch bezogen auf das Einschraubteil 30 unverschieblich gehalten ist. Bei der in den Figuren 1 und 2 dargestellten ersten Ausführungsform der Erfindung durchgreift hierzu die Hülse 13 das Einschraubteil 30 und taucht mit ihrem der ersten Anschlußöffnung 18 abgewandten hinteren Ende in eine Aufnahme 54 des Polrohrs 42 ein und ist in diesem Bereich über ein Gewinde 55 mit dem Polrohr 42 verschraubt. Das Polrohr 42 wiederum bildet in Höhe des Gewindes 55 eine Polrohrhülse 56, die in den hinteren Bohrungsabschnitt 33 der Durchgangsbohrung 31 des Einschraubteiles 30 soweit eintaucht, daß sich zwischen der Stufe 34 und der der Anschlußöffnung 18 zugewandten Stirnseite 57 der Polrohrhülse 56 ein Spiel, beispielsweise ein Abstand von ca. 0,1 mm ergibt.

Die Polrohrhülse 56 ist in Höhe des hinteren Bohrungsabschnittes 33 über eine Bördelung formschlüssig mit dem Einschraubteil 30 verbunden. Hierzu wird das Einschraubteil 30 im Bereich des Sechskantes 36 radial nach innen verbogen, wie dies in Figur 2 durch die Pfeile 59 veranschaulicht ist. Nach dem Verbiegen greift das Einschraubteil 30 in Höhe des Sechskantes 36 in eine Ringnut 60 ein, die die Polrohrhhülse 56 in Umfangsrichtung umgibt. In Figur 1 ist das Einschraubventil 11 zur Erzielung einer besseren Übersicht in dem Zustand dargestellt, der vor dem Anbringen der Bördelung vorliegt.

Durch die Bördelung des Einschraubteiles 30 wird sichergestellt, daß das Einschraubteil 30 formschlüssig mit dem Polrohr 42 verbunden ist, der wiederum mit der Hülse 13 verschraubt ist. Die Bördel-Verbindung erlaubt es hierbei, das Polrohr 42 schräg zum Einschraubteil 30 auszurichten, also um eine senkrecht zur Einschraubrichtung ausgerichtete Schwenkachse zu verschwenken. Die mit dem Polrohr 42 verschraubte Hülse 13 durchgreift den vorderen Bohrungsabschnitt 32 des Einschraubteiles 30 mit radialem Spiel, so daß die Hülse 13 zusammen mit dem Polrohr 42 schräg zum Einschraubteil 30 ausgerichtet werden kann, also eine Taumel- oder Schwenkbewegung erfolgen kann zum Ausgleich einer Fehlausrichtung des Einschraubteiles 30, wobei aufgrund der Schraubverbindung zwischen Polrohr 42 und Hülse 13 sichergestellt ist, daß die Hülse 13 auch unter wechselseitiger Druckbelastung keine axiale Bewegung ausführen kann.

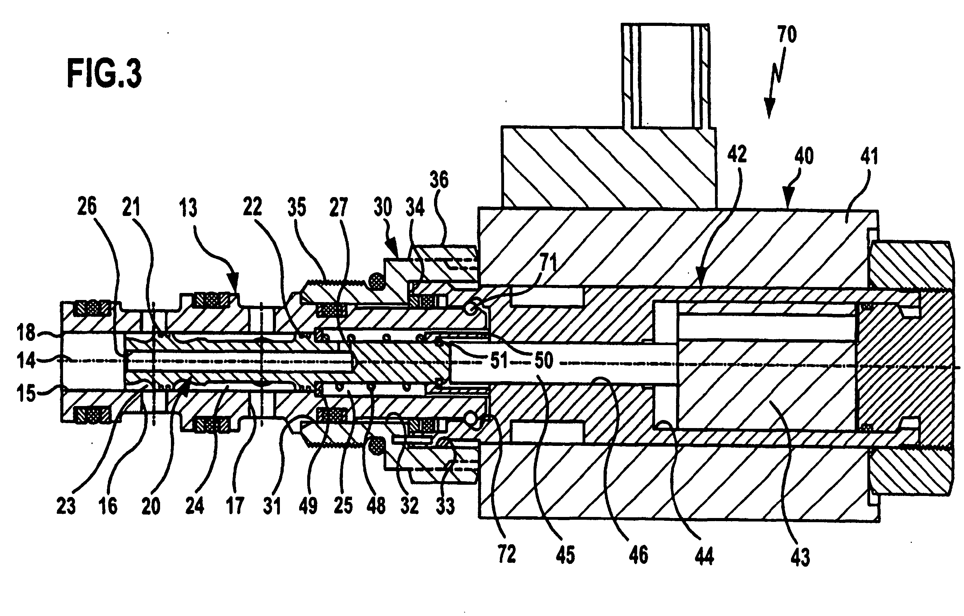

In den Figuren 3 bis 12 sind alternative Ausgestaltungen des erfindungsgemäßen Einschraubventiles dargestellt, wobei identische bzw. wirkungsgleiche Bauteile dieselben Bezugszeichen tragen wie in Figur 1. Diesbezüglich wird zur Vermeidung von Wiederholungen vollinhaltlich auf die voranstehenden Ausführungen Bezug genommen.

In Figur 3 ist ein insgesamt mit dem Bezugszeichen 70 belegtes Einschraubventil in Form eines 3/2-Wegeventiles dargestellt, das sich von dem voranstehend erläuterten Einschraubventil 11 dadurch unterscheidet, daß die Hülse 13 mit dem Polrohr 42 nicht verschraubt ist, stattdessen ist zwischen der Hülse 13 und der Polrohrhülse 56 eine Sprengring-Verbindung vorgesehen. Hierzu trägt die Hülse 13 bei der in Figur 3 dargestellten Ausführungsform in ihrem der ersten Anschlußöffnung 18 abgewandten Endbereich, mit dem sie in die Polrohrhülse 56 des Polrohres 42 eintaucht, einen Sprengring 71, und in Höhe des Sprengring 71 weist die Polrohrhülse 56 eine korrespondierende Ringnut 72 auf. Die Verbindung zwischen der Polrohrhülse 56 und dem Einschraubteil 30 erfolgt auch bei der in Figur 3 dargestellten zweiten Ausführungsform über eine Bördelung entsprechend der in den Figuren 1 und 2 dargestellten Ausführungsform, so daß sich ebenfalls eine formschlüssige Verbindung zwischen Einschraubteil 30 und Polrohrhülse 56 ergibt, wobei die Verbindung eine Ausgleichbewegung der Polrohrhülse 56 bezogen auf das Einschraubteil 30 ermöglicht.

Auch bei der in Figur 3 dargestellten Ausführungsform ist die Hülse 13 mit axialem Spiel im vorderen Bohrungsabschnitt 33 des Einschraubteiles 30 gehalten. Zusätzlich ist auch ein axiales Spiel zwischen der Polrohrhülse 56 und dem in die Polrohrhülse 56 eintauchenden Endabschnitt der Hülse 13 vorgesehen. Dadurch kann die Hülse 13 nicht nur senkrecht zum Einschraubteil 30 sondern auch senkrecht zur Polrohrhülse 56 verschwenkt werden, beispielsweise in eine schräg zur Einschraubrichtung ausgerichtete Stellung, wobei jedoch aufgrund der zum Einsatz kommenden Sprengring-Verbindung zwischen der Hülse 13 und der Polkemhülse 56 sichergestellt ist, daß die Hülse 13 in axialer Richtung festgelegt ist.

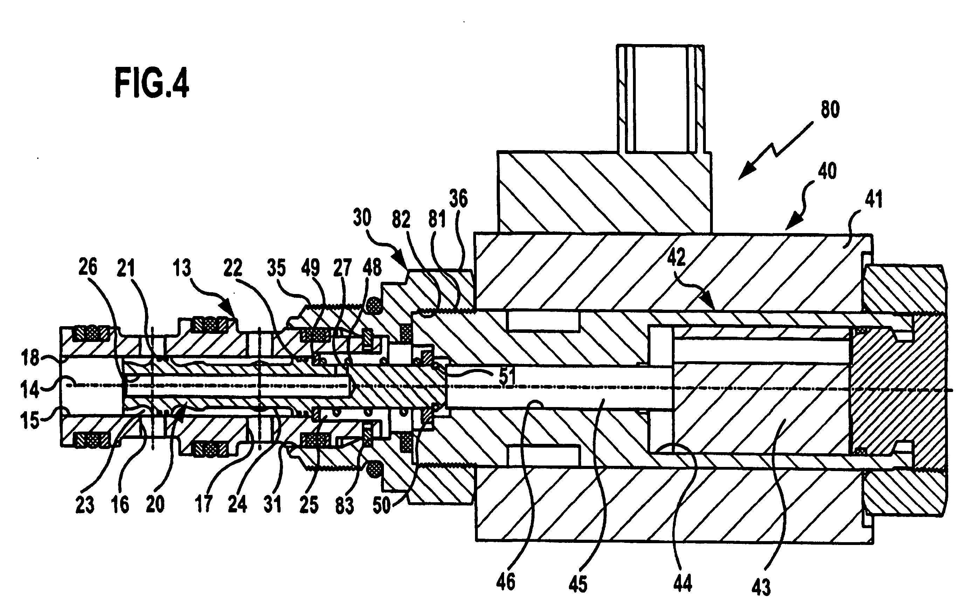

In Figur 4 ist eine dritte Ausführungsform des erfindungsgemäßen Einschraubventiles dargestellt, das insgesamt das Bezugszeichen 80 trägt. Es unterscheidet sich von den voranstehend erläuterten ersten und zweiten Ausführungsformen dadurch, daß die Hülse 13 unmittelbar mit dem Einschraubteil 30 formschlüssig verbunden ist, wobei die Hülse 13 schräg oder senkrecht zur Einschraubrichtung des Einschraubteiles 30 versetzt und/oder verschwenkt werden kann, während das Polrohr 42 mit dem Einschraubteil 30 verschraubt ist. Hierzu trägt die Polrohrhülse 56 des in Figur 4 dargestellten Einschraubventiles 80 ein Außengewinde 81, das mit einem Innengewinde 82 des hinteren Bohrungsabschnittes 33 des Einschraubteiles 30 zusammenwirkt. Die Hülse 13 des Einschraubventiles 80 taucht in den vorderen Bohrungsabschnitt 32 des Einschraubteiles 30 ein und ist in diesem vorderen Bohrungsabschnitt 32 mit Spiel gehalten, wobei mittels eines Sicherungsringes 83 eine formschlüssige Verbindung zwischen der Hülse 13 und dem Einschraubteil 30 erzielt wird. Durch den Sicherungsring 83 ist die Hülse 13 in axialer Richtung festgelegt, während gleichzeitig aufgrund des radialen Spiels der Hülse 13 im vorderen Endabschnitt 32 eine Ausgleichsbewegung der Hülse 13 bezogen auf die Einschraubrichtung des Einschraubteiles 30 ermöglicht wird, insbesondere kann die Hülse 13 in radialer Richtung versetzt oder schräg zur Einschraubrichtung ausgerichtet werden.

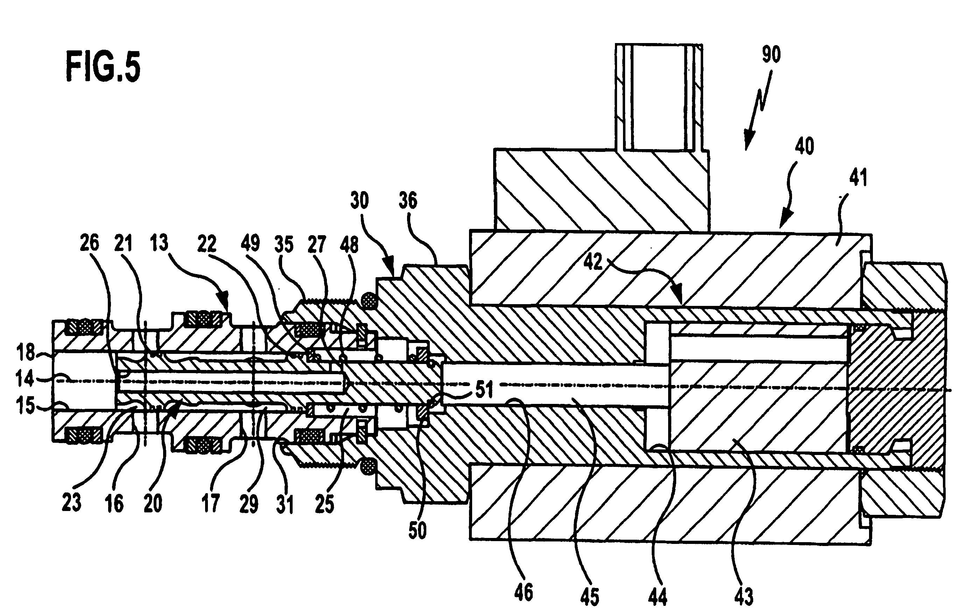

In Figur 5 ist eine vierte Ausführungsform des erfindungsgemäßen Einschraubventiles dargestellt, das mit dem Bezugszeichen 90 belegt ist. Dieses unterscheidet sich von dem in Figur 4 illustrierten Einschraubventil 80 dadurch, daß das Einschraubteil 30 einstückig mit dem Polrohr 42 verbunden ist. Dies ermöglicht eine besonders zeitsparende Montage des Einschraubventiles.

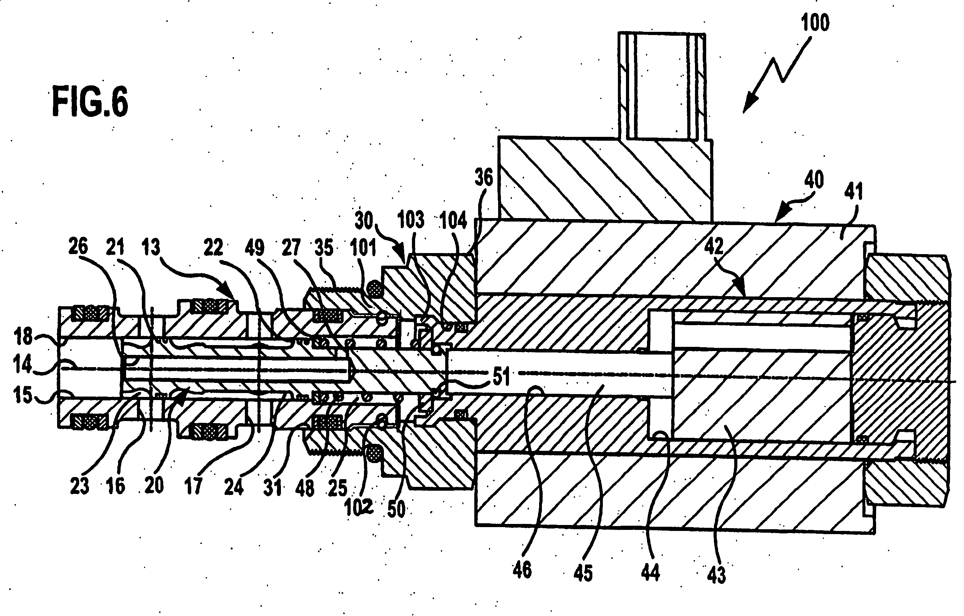

In Figur 6 ist eine fünfte Ausführungsform illustriert in Form eines insgesamt mit dem Bezugzeichen 100 belegten Einschraubventiles. Es unterscheidet sich von den voranstehend erläuterten Ausführungsbeispielen dadurch, daß sowohl die Hülse 13 als auch das Polrohr 42 jeweils senkrecht zur Einschraubrichtung des Einschraubteiles 30 versetzt und/oder verschwenkt werden können. Entsprechend der Ausgestaltung des in Figur 4 dargestellten Einschraubventiles - 80 taucht die Hülse 13 des Einschraubventiles 100 lediglich in den vorderen Bohrungsabschnitt 32 des Einschraubteiles 30 ein und ist in diesem mit radialem Spiel gehalten. Die axiale Festlegung der Hülse 13 am Einschraubteil 30 erfolgt mittels eines Sprengringes 101, der den in den vorderen Bohrungsabschnitt 32 eintauchenden Endabschnitt der Hülse 13 in Umfangsrichtung umgibt und der in eine korrespondierende Ringnut 102 eintaucht, die in die Wandung des vorderen Bohrungsabschnittes 32 des Einschraubteiles 30 eingeformt ist. Bei der Montage des Einschraubventiles 100 wird der Sprengring 101 im zusammengedrückten Zustand von einer in die Hülse 13 eingeformten Ringnut 105 aufgenommen. Die Sprengring-Verbindung unter gleichzeitiger Sicherstellung eines radialen Spiels zwischen der Hülse 13 und dem vorderen Bohrungsabschnitt 32 stellt sicher, daß die Hülse 13 axial unverschieblich und senkrecht zur Einschraubrichtung des Einschraubteiles 30 versetz- und/oder verschwenkbar ist.

Die Verbindung zwischen dem Einschraubteil 30 und dem Polrohr 42 erfolgt beim in Figur 6 dargestellten Einschraubventil 100 mittels einer Bördelung. Hierzu wird das freie Ende der in den hinteren Bohrungsabschnitt 33 des Einschraubteiles 30 eintauchenden Polrohrhülse 56 in radialer Richtung aufgeweitet, so daß ein erweiterter Hülsenabschnitt 103 einen hinteren Endabschnitt 104 des hinteren Bohrungsabschnittes 33 hintergreift und somit axial unverschieblich und formschlüssig mit dem Einschraubteil 30 verbunden ist.

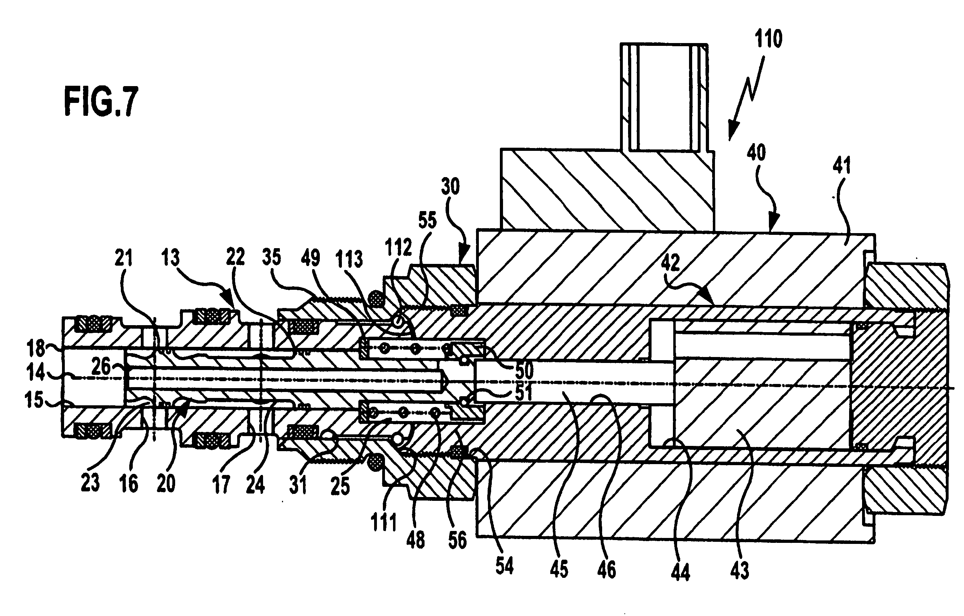

In Figur 7 ist eine sechste Ausführungsform des erfindungsgemäßen Einschraubventiles dargestellt. Dieses ist insgesamt mit dem Bezugszeichen 110 belegt und weist eine Schraubverbindung zwischen dem Einschraubteil 30 und dem Polrohr 42 auf, der eine Polrohrhülse 56 umfaßt, die über ein Außengewinde mit dem hinteren Bohrungsabschnitt 33 des Einschraubteiles 30 verschraubt ist.

Beim Einschraubventil 110 geht der vordere Bohrungsabschnitt 32 nicht über eine radial verlaufende Stufe sondern über eine konische Erweiterung 111 in den hinteren Bohrungsabschnitt 33 über. Die Hülse 13 durchgreift den vorderen Bohrungsabschnitt 32 und ragt mit ihrem der ersten Anschlußöffnung 18 abgewandten hinteren Ende bis in Höhe der konischen Erweiterung 111 und trägt in diesem Bereich einen Sprengring 112, der an der konischen Erweiterung 111 anliegt.

Das der ersten Anschlußöffnung 18 abgewandte Ende der Hülse 13 ist ballig ausgestaltet und ragt in eine korrespondierend ausgebildete ballige Aufnahme 113 der Polrohrhülse 56, die sich bis in Höhe der konischen Erweiterung 111 erstreckt. Da die Hülse 13 auch bei der in Figur 7 dargestellten sechsten Ausführungsform mit radialem Spiel im vorderen Bohrungsabschnitt 33 gehalten ist, kann die Hülse 13 senkrecht zum Einschraubteil 30 versetzt und/oder verschwenkt werden, wobei gleichzeitig durch den Einsatz des Sprengringes 112 sichergestellt ist, daß auch bei einer bezogen auf die Längsachse 14 wechselseitigen Druckbelastung der Hülse 13 eine axiale Bewegung der Hülse 13 relativ zum Einschraubteil 30 zuverlässig verhindert wird.

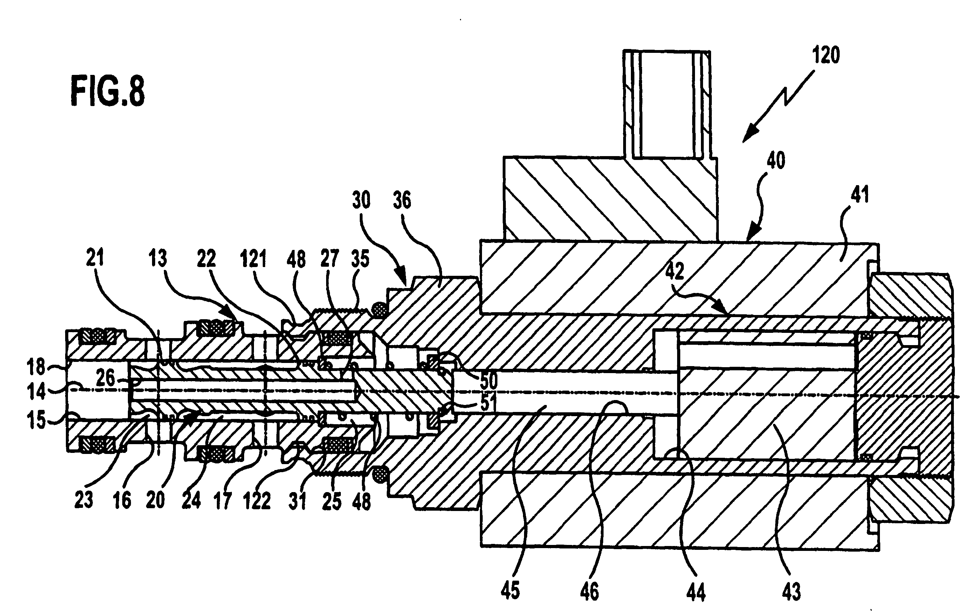

Eine siebte Ausführungsform des Einschraubventiles ist in Figur 8 dargestellt und insgesamt mit dem Bezugszeichen 120 belegt. Bei dieser Ausgestaltung ist ebenfalls eine einteilige Verbindung zwischen dem Einschraubteil 30 und dem Polrohr 42 vorgesehen, und die Hülse 13 ist mit radialem Spiel im vorderen Bohrungsabschnitt 32 des Einschraubteiles 30 gehalten. Mittels einer Bördelung ist die Hülse 13 des Einschraubventiles 120 formschlüssig mit dem Einschraubteil 30 verbunden. Hierzu weist das Einschraubteil 30 in axialer Richtung vor dem Außengewinde 35 einen Kragen 121 auf, der radial nach innen verformt ist und einen Formschluß ausbildet mit einer korrespondierenden Ringnut 122, die in Höhe des Kragens 121 in die Hülse 13 eingeformt ist. Durch die Bördelung wird sichergestellt, daß die Hülse 13 senkrecht zum Einschraubteil 30 versetzt und/oder verschwenkt werden kann, wobei gleichzeitig eine axiale Bewegung der Hülse 13 relativ zum Einschraubteil 30 zuverlässig verhindert wird.

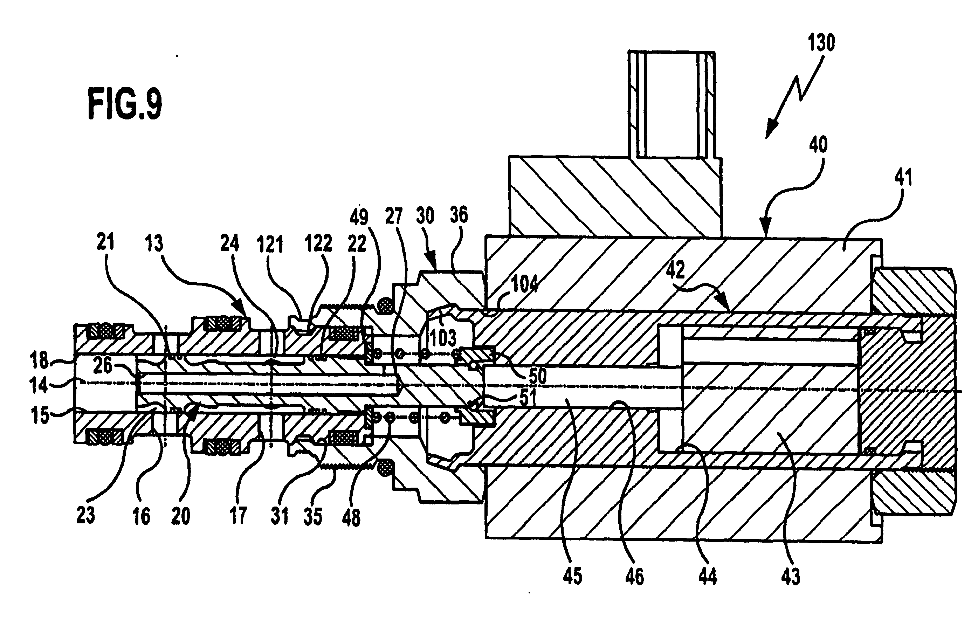

In Figur 9 ist eine achte Ausführungsform des erfindungsgemäßen Einschraubventiles dargestellt, das insgesamt mit dem Bezugszeichen 130 belegt ist. Entsprechend der Ausgestaltung des voranstehend unter Bezugnahme auf die Figur 8 erläuterten Einschraubventiles 120 ist auch beim Einschraubventil 130 eine Bördelung zwischen dem Einschraubteil 30 und der Hülse 13 vorgesehen. Hierzu umfaßt das Einschraubteil 30 des Einschraubventiles 130 ebenfalls einen Kragen 121, der in eine korrespondierende Ringnut 122 der Hülse 13 eingepresst ist.

Während beim Einschraubventil 120 eine einstückige Verbindung zwischen Einschraubteil 30 und Polrohr 42 zum Einsatz kommt, sind bei dem in Figur 9 dargestellten Einschraubventil 130 Polrohr 42 und Einschraubteil 30 separat ausgebildet. Die Verbindung zwischen dem Polrohr 42 und dem Einschraubteil 30 erfolgt beim Einschraubventil 130 mittels einer Bördelung, wie sie voranstehend bereits unter Bezugnahme auf das in Figur 6 dargestellte Einschraubventil 100 erläutert wurde. Wiederum weist die Polrohrhülse 56 einen erweiterten Hülsenabschnitt 103 auf, der einen hinteren Endabschnitt 104 des hinteren Bohrungsabschnittes 33 des Einschraubteiles 30 hintergreift.

Mittels der Bördel-Verbindung sowohl der Hülse 13 als auch des Polrohrs 42 mit dem Einschraubteil 30 wird beim Einschraubventil 130 sichergestellt, daß ein Verkanten oder Verklemmen oder eine sonstige Fehlausrichtung des Einschraubteiles 30 beim Einschrauben des Einschraubventiles 130 in ein zugeordnetes Gehäuse, beispielsweise eines Steuerblockes, weder eine Beeinträchtigung der Bewegung des Ventilkolbens 20 noch eine Beeinträchtigung der Bewegung des Magnetankers 43 und/oder des Stößels 45 zur Folge hat, denn auch das den Elektromagnet 41 aufnehmende Polrohr 42 kann senkrecht zum Einschraubteil 30 versetzt und/oder verschwenkt werden.

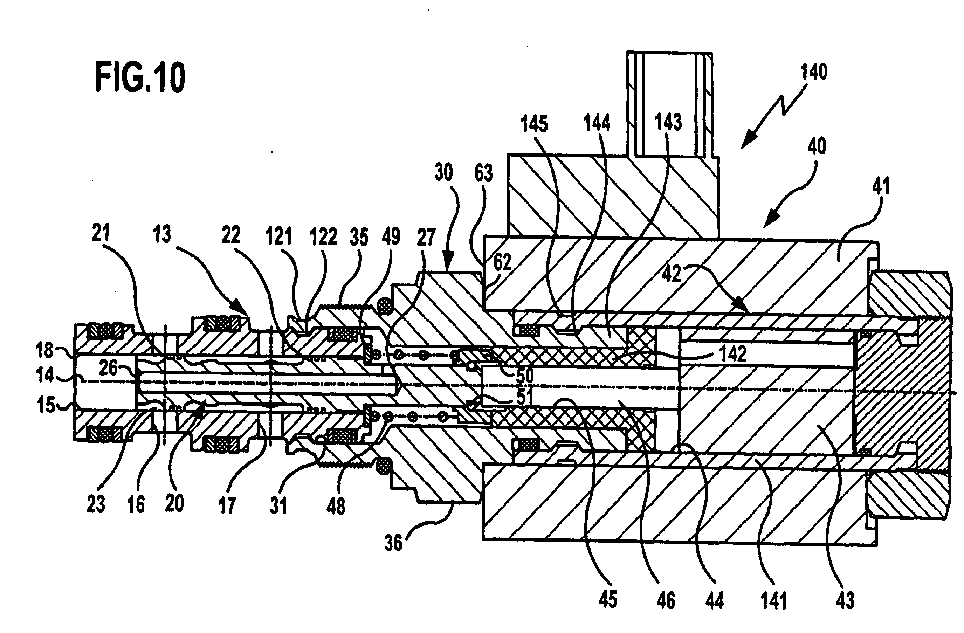

Eine neunte Ausführungsform des erfindungsgemäßen Einschraubventiles ist in Figur 10 dargestellt und insgesamt mit dem Bezugszeichen 140 belegt. Dieses weist ebenfalls eine Bördel-Verbindung zwischen der Hülse 13 und dem Einschraubteil 30 auf, wie sie bereits voranstehend unter Bezugnahme auf die Figuren 8 und 9 erläutert wurde. Im Gegensatz zu den voranstehend erläuterten Ausführungsformen kommt beim Einschraubventil 140 ein zweiteiliges Polrohr 42 zum Einsatz mit einem in Umfangsrichtung den Elektromagneten 41 aufnehmenden Polmantel 141 und einem Polkern 142. Der Polkern 142 wird vom Stößel 45 durchgriffen und ist in eine einstückig mit dem Einschraubteil 30 verbundene Anschlußhülse 143 eingepreßt, die in Umfangsrichtung von einem dem Einschraubteil 30 zugewandten vorderen Endbereich des Polmantels 141 umgeben ist. Hierbei ist eine Bördel-Verbindung zwischen der Anschlußhülse 143 und dem Polmantel 141 vorgesehen. Zu diesem Zweck weist die Anschlußhülse 143 auf ihrer dem Polmantel 141 zugewandten Außenseite eine umlaufende Ringnut 144 auf, in die ein Verformungsabschnitt 145 des Polmantels 141 eingepreßt ist. Da die Anschlußhülse 143 mit Ausnahme des Bereiches der Ringnut 144 ein radiales Spiel zum Polmantel 141 aufweist, können der Polmantel 141 und der daran in Umfangsrichtung gehaltene Elektromagnet 41 schräg zur Anschlußhülse 143 und damit auch schräg zum Einschraubteil 30 ausgerichtet werden. Dies wiederum vermindert die Gefahr, daß die elektromagnetische Betätigung des Einschraubventiles 130 bei einem Verkanten oder Verklemmen des Einschraubteiles 30 beeinträchtigt wird.

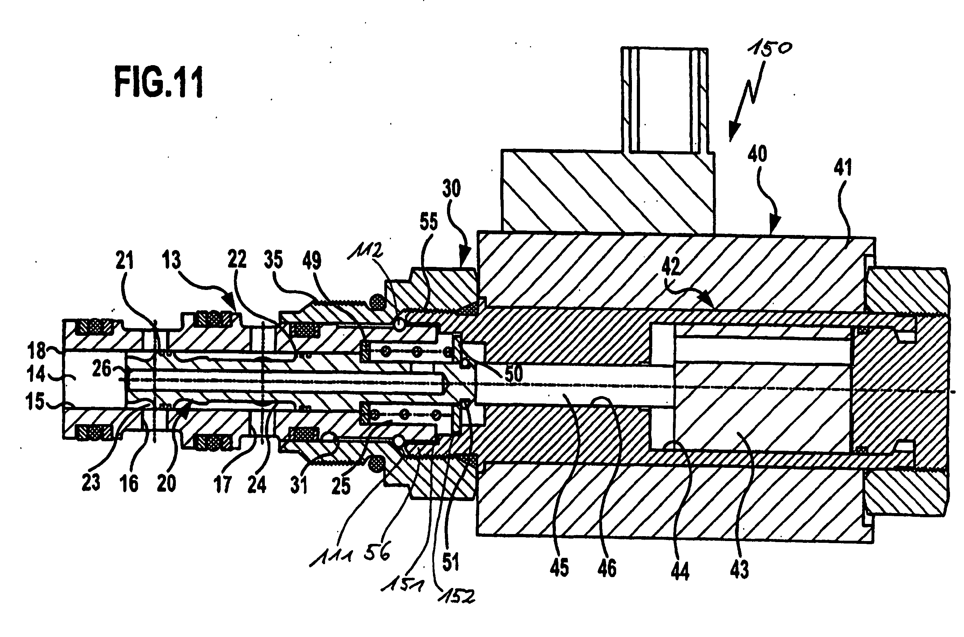

In Figur 11 ist eine zehnte Ausführungsform des erfindungsgemäßen Einschraubventiles dargestellt, das insgesamt mit dem Bezugszeichen 150 belegt ist. Dieses ist ähnlich aufgebaut wie das in Figur 7 dargestellte Ausführungsbeispiel. Im Unterschied zu diesem taucht die Hülse 13 bei dem in Figur 11 dargestellten Ausführungsbeispiel in die Polrohrhülse 56 ein, wobei sich die Aufnahme 54 in Richtung auf das Polrohr 42 über zwei radial verlaufende Stufen 151, 152 verengt. Die Hülse 13 liegt mit ihrem in die Polrohrhülse 56 eintauchenden Endbereich mit Spiel an der vorderen Stufe 151 an, während der Stützkörper 50 an der hinteren Stufe 152 gehalten ist. Die Hülse 13 wird hierbei mit radialem und axialem Spiel von der Polrohrhülse 56 aufgenommen.

Auch bei der in Figur 11 dargestellten zehnten Ausführungsform des erfindungsgemäßen Einschraubventiles weist das Einschraubteil 30 eine konische Erweiterung 111 auf. In Höhe dieser Erweiterung 111 ist die Hülse 13 entsprechend der in Figur 7 dargestellten sechsten Ausführungsform von einem Sprengring 112 umgeben, der jedoch lediglich bei einer in die dem Einschraubteil 30 abgewandte Richtung gerichteten axialen Druckbelastung der Hülse 13 mit einer Axialkraft belastet wird, während bei einer axialen Druckbelastung der Hülse 13 in Richtung des Einschraubteiles 30, in Figur 11 also nach rechts, der Sprengring 112 keine Axialbelastung erfährt, sondern sich die Hülse 13 an der vorderen Stufe 151 der Polrohrhülse 56 abstützt. Durch den Einsatz des Sprengringes 112 in Kombination mit der vorderen Stufe 151 ist folglich die Hülse 13 in axialer Richtung unbeweglich gehalten, während eine radiale Versatz- oder Verschwenkbewegung durch das zwischen der Hülse 13 und der Polrohrhülse 56 und dem Einschraubteil 30 vorgesehene Spiel sichergestellt ist. Dieses Spiel kann auch als Fertigungsausgleichmaß bezeichnet werden.

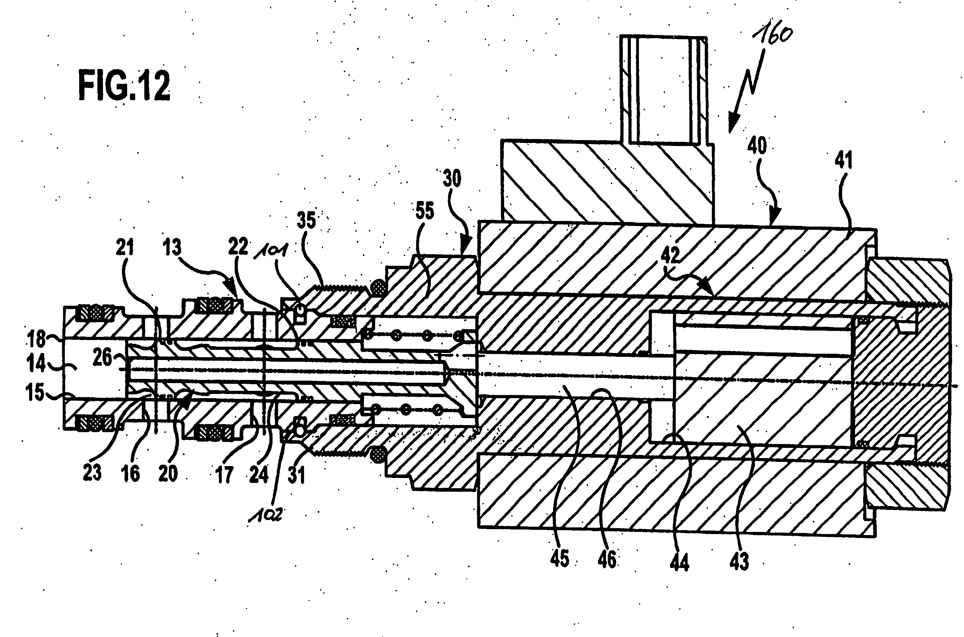

Während in Figur 11 das Einschraubteil 30 über ein Gewinde mit dem Polrohr 42 verbunden ist, ist bei der in Figur 12 dargestellten elften Ausführungsform des erfindungsgemäßen Einschraubventiles eine einstückige Verbindung zwischen Einschraubteil 30 und Polrohr 42 vorgesehen. Das in Figur 12 dargestellte Einschraubventil ist insgesamt mit dem Bezugszeichen 160 belegt. Die axiale Festlegung der Hülse 13 am Einschraubteil 30 erfolgt bei dieser Ausführungsform entsprechend der Ausgestaltung des in Figur 6 illustrierten fünften Ausführungsbeispieles mittels eines Sprengringes 101, der bei der Montage des Einschraubventiles 160 von einer in die Hülse 13 eingearbeiteten Ringnut 102 aufgenommen wird. Der Sprengring 101 ist hierbei im Bereich des vorderen, dem Polrohr 42 abgewandten Endes des Einschraubteiles 30 angeordnet, wobei sich in geringem axialen Abstand zum Sprengring 101 und der diesen aufnehmenden Ringnut 102 der Außendurchmesser der Hülse 13 geringfügig verringert, so daß die Hülse 13 mit radialem Spiel von der Durchgangsbohrung 31 des Einschraubteiles 30 aufgenommen wird. Dies ermöglicht es, die Hülse 13 in radialer Richtung zu verschwenken, um eine Fehlausrichtung des Einschraubteiles 30 beim Einschrauben in ein das Einschraubventil 160 aufnehmendes Gehäuse zu korrigieren.

## Patentansprüche

1. Einschraubventil mit einem Einschraubteil (30) und mit einer zumindest zwei wechselseitig druckbelastbare Anschlußöffnungen (16, 17) aufweisenden Hülse (13), in der ein Ventilkolben (20) axial verschiebbar gehalten ist zum Freigeben und Unterbrechen einer Strömungsverbindung zwischen den Anschlußöffnungen (16, 17), wobei die Hülse bezogen auf das Einschraubteil (30) axial unverschieblich gelagert ist, **dadurch gekennzeichnet, daß** die **gekennzeichnet, daß** die Hülse (13) senkrecht zur Einschraubrichtung des Einschraubteiles (30) versetz- und/oder verschwenkbar gelagert ist.

2. Einschraubventil nach Anspruch 1, **dadurch gekennzeichnet, daß** die Hülse (13) über mindestens eine formschlüssige Verbindung mit dem Einschraubteil (30) verbunden ist.

3. Einschraubventil nach Anspruch 1 oder 2, **dadurch gekennzeichnet, daß** die Hülse (13) unmittelbar mit dem Einschraubteil (30) formschlüssig verbunden ist.

4. Einschraubventil nach Anspruch 3, **dadurch gekennzeichnet, daß** die Hülse (13) über eine Bördelung mit dem Einschraubteil (30) formschlüssig verbunden ist. -

5. Einschraubventil nach Anspruch 3, **dadurch gekennzeichnet, daß** die Hülse (13) über eine Sicherungsring- oder Sprengring-Verbindung (83, 101, 112) mit dem Einschraubteil (30) verbunden ist.

6. Einschraubventil nach Anspruch 5, **dadurch gekennzeichnet, daß** das Einschraubteil (30) eine Aufnahme (32) ausbildet, in der ein Endabschnitt der Hülse (13) mit Spiel mittels eines Sicherungs- oder Sprengringes (83, 101, 112) gehalten ist.

7. Einschraubventil nach Anspruch 1 oder 2, **dadurch gekennzeichnet, daß** die Hülse (13) über mindestens ein Zwischenteil (42) mit dem Einschraubteil (30) verbunden ist.

8. Einschraubventil nach Anspruch 7, **dadurch gekennzeichnet, daß** die Hülse (13) am Zwischenteil (42) festgelegt ist und daß das Zwischenteil (42) formschlüssig mit dem Einschraubteil (30) verbunden und bezogen auf das Einschraubteil (30) axial unverschiebbar und senkrecht zur Einschraubrichtung des Einschraubteiles (30) versetz- und/oder verschwenkbar ist.

9. Einschraubventil nach Anspruch 8, **dadurch gekennzeichnet, daß** die Hülse (13) mit dem Zwischenteil (42) verschraubt ist.

10. Einschraubventil nach Anspruch 8 oder 9, **dadurch gekennzeichnet, daß** das Zwischenteil (42) über eine Bördelung mit dem Einschraubteil (30) verbunden ist.

11. Einschraubventil nach einem der Ansprüche 7 bis 10, **dadurch gekennzeichnet, daß** die Hülse (13) mit dem Zwischenteil (42) lösbar verbindbar ist und daß das Einschraubteil (30) einen Anschlag (34) ausbildet, an dem das Zwischenteil (42) axial unverschieblich gehalten ist.

12. Einschraubventil nach einem der Ansprüche 7 bis 11, **dadurch gekennzeichnet, daß** die Hülse (13) axial unverschieblich und senkrecht zur Einschraubrichtung des Einschraubteiles (30) versetz- und/oder verschwenkbar am Zwischenteil (42) gehalten ist und daß das Zwischenteil (42) axial unverschieblich und senkrecht zur Einschraubrichtung des Einschraubteiles (30) versetz- und/oder verschwenkbar am Einschraubteil (30) gehalten ist.

13. Einschraubventil nach einem der Ansprüche 7 bis 12, **dadurch gekennzeichnet, daß** das Zwischenteil (42) eine Axialbohrung (54) aufweist, in der ein Endbereich der Hülse (13) mit radialem Spiel mittels eines Spreng- oder Sicherungsringes (71) gehalten ist.

14. Einschraubventil nach einem der Ansprüche 7 bis 13, **dadurch gekennzeichnet, daß** das Einschraubventil (11, 70, 80, 90, 100, 110, 120, 130, 140) eine elektromagnetische Betätigungseinheit (40) aufweist mit einem Elektromagneten (41), der ein Polrohr (42) umgibt, wobei das Polrohr (42) das mit der Hülse (13) verbundene Zwischenteil ausbildet.

15. Einschraubventil nach einem der voranstehenden Ansprüche, **dadurch gekennzeichnet, daß** das Einschraubventil (140) eine elektromagnetische Betätigungseinheit (40) umfaßt mit einem Polrohr, an dem ein Elektromagnet (41) gehalten ist und das bezogen auf das Einschraubteil (30) axial unverschieblich und senkrecht zur Einschraubrichtung des Einschraubteiles (30) versetz- und/oder verschwenkbar gelagert ist.

## Claims

1. Screw-in valve comprising a screw-in component (30), a sleeve (13) with at least two connection openings (16, 17) to which a pressure load can be alternately applied, and a valve piston (20) held for axial displacement in the sleeve for opening and closing a flow connection between the connection openings (16, 17), the sleeve being mounted so as to be axially immovable relative to the screw-in component (30), **characterized in that** the sleeve (13) is mounted so as to be displaceable and/or pivotable perpendicularly to the screw-in direction of the screw-in component (30).

2. Screw-in valve in accordance with claim 1, **characterized in that** the sleeve (13) is connected to the screw-in component (30) by at least one positive connection.

3. Screw-in valve in accordance with claim 1 or 2, **characterized in that** the sleeve (13) is directly positively connected to the screw-in component (30).

4. Screw-in valve in accordance with claim 3, **characterized in that** the sleeve (13) is positively connected to the screw-in component (30) by means of a flange.

5. Screw-in valve in accordance with claim 3, **characterized in that** the sleeve (13) is connected to the screw-in component (30) by means of a retaining ring or snap ring connection (83, 101, 112).

6. Screw-in valve in accordance with claim 5, **characterized in that** the screw-in component (30) forms a receptacle (32) in which an end section of the sleeve (13) is held with play by means of a retaining ring or a snap ring (83, 101, 112).

7. Screw-in valve in accordance with claim 1 or 2, **characterized in that** the sleeve (13) is connected to the screw-in component (30) by at least one intermediate component (42).

8. Screw-in valve in accordance with claim 7, **characterized in that** the sleeve (13) is fixed on the intermediate component (42), and **in that** the intermediate component (42) is positively connected to the screw-in component (30) and is axially immovable but displaceable and/or pivotable perpendicularly to the screw-in direction of the screw-in component (30) relative to the screw-in component (30).

9. Screw-in valve in accordance with claim 8, **characterized in that** the sleeve (13) is screwed to the intermediate component (42).

10. Screw-in valve in accordance with claim 8 or 9, **characterized in that** the intermediate component (42) is connected to the screw-in component (30) by means of a flange.

11. Screw-in valve in accordance with any one of claims 7 to 10, **characterized in that** the sleeve (13) is releasably connectable to the intermediate component (42), and **in that** the screw-in component (30) forms a stop (34) on which the intermediate component (42) is axially immovably held.

12. Screw-in valve in accordance with any one of claims 7 to 11, **characterized in that** the sleeve (13) is held on the intermediate component (42) so as to be axially immovable but displaceable and/or pivotable perpendicularly to the screw-in direction of the screw-in component (30), and **in that** the intermediate component (42) is held on the screw-in component (30) so as to be axially immovable but displaceable and/or pivotable perpendicularly to the screw-in direction of the screw-in component (30).

13. Screw-in valve in accordance with any one of claims 7 to 12, **characterized in that** the intermediate component (42) comprises an axial bore (54) in which an end area of the sleeve (13) is held with radial play by means of a snap ring or a retaining ring (71).

14. Screw-in valve in accordance with any one of claims 7 to 13, **characterized in that** the screw-in valve (11, 70, 80, 90, 100, 110, 120, 130, 140) comprises an electromagnetic actuating unit (40) with an electromagnet (41) which surrounds a pole tube (42), and the pole tube (42) forms the intermediate component which is connected to the sleeve (13).

15. Screw-in valve in accordance with any one of the preceding claims, **characterized in that** the screw-in valve (140) comprises an electromagnetic actuating unit (40) with a pole tube on which an electromagnet (41) is held, and the pole tube is mounted so as to be axially immovable but displaceable and/or pivotable perpendicularly to the screw-in direction of the screw-in component (30) relative to the screw-in component (30).

## Revendications

1. Soupape à visser comportant un élément fileté à visser (30) et un manchon (13) présentant au moins deux ouvertures de raccordement (16, 17) pouvant être pressurisées de manière alternée, dans lequel un piston à soupape (20) est maintenu en étant mobile axialement, afin de libérer et d'interrompre une liaison d'écoulement entre les ouvertures de raccordement (16, 17), ledit manchon étant monté en étant immobile axialement par rapport à l'élément fileté (30), **caractérisée en ce que** le manchon (13) est monté de manière à pouvoir se déplacer et / ou pivoter perpendiculairement à la direction de vissage de l'élément fileté à visser (30).

2. Soupape à visser selon la revendication 1, **caractérisée en que** le manchon (13) est relié à l'élément fileté à visser (30) par l'intermédiaire d'au moins une liaison par complémentarité de formes.

3. Soupape à visser selon l'une quelconque des revendications 1 ou 2, **caractérisée en ce que** le manchon (13) est relié directement par complémentarité de formes à l'élément fileté à visser (30).

4. Soupape à visser selon la revendication 3, **caractérisée en ce que** le manchon (13) est relié par complémentarité de formes, par l'intermédiaire de bords rabattus, à l'élément fileté à visser (30).

5. Soupape à visser selon la revendication 3, **caractérisée en ce que** le manchon (13) est relié à l'élément fileté à visser (30) par l'intermédiaire d'une liaison par un circlip ou par un jonc (83, 101, 112).

6. Soupape à visser selon la revendication 5, **caractérisée en ce que** l'élément fileté à visser (30) forme un logement (32), dans lequel est maintenue une section d'extrémité du manchon (13), avec un certain jeu, à l'aide d'un circlip ou d'un jonc (83, 101, 112).

7. Soupape à visser selon l'une quelconque des revendications 1 ou 2, **caractérisée en ce que** le manchon (13) est relié à l'élément fileté à visser (30) par l'intermédiaire d'au moins une pièce intermédiaire (42).

8. Soupape à visser selon la revendication 7, **caractérisée en ce que** le manchon (13) est fixé sur la pièce intermédiaire (42), et **en ce que** la pièce intermédiaire (42) est reliée par complémentarité de formes à l'élément fileté à visser (30), et peut se déplacer et / ou pivoter perpendiculairement à la direction de vissage de l'élément fileté à visser (30), en étant immobile axialement par rapport audit élément fileté à visser (30).

9. Soupape à visser selon la revendication 8, **caractérisée en ce que** le manchon (13) est vissé avec la pièce intermédiaire (42).

10. Soupape à visser selon l'une quelconque des revendications 8 ou 9, **caractérisée en ce que** la pièce intermédiaire (42) est reliée à l'élément fileté à visser (30) par des bords rabattus.

11. Soupape à visser selon l'une quelconque des revendications 7 à 10, **caractérisée en ce que** le manchon (13) peut être relié de manière amovible à la pièce intermédiaire (42), et **en ce que** l'élément fileté à visser (30) forme une butée (34), contre laquelle est maintenu l'élément intermédiaire (42) en étant immobile axialement.

12. Soupape à visser selon l'une quelconque des revendications 7 à 11, **caractérisée en ce que** le manchon (13) est maintenu sur la pièce intermédiaire (42) en pouvant se déplacer et / ou pivoter perpendiculairement à la direction de vissage de l'élément fileté à visser (30), en étant immobile axialement, et **en ce que** la pièce intermédiaire (42) est maintenue sur l'élément fileté à visser (30) en pouvant se déplacer et / ou pivoter perpendiculairement à la direction de vissage de l'élément fileté à visser (30), et en étant immobile axialement.

13. Soupape à visser selon l'une quelconque des revendications 7 à 12, **caractérisée en ce que** la pièce intermédiaire (42) présente un alésage axial (54), dans lequel est maintenue une zone d'extrémité du manchon (13), avec un jeu radial, à l'aide d'un jonc ou d'un circlip (71).

14. Soupape à visser selon l'une quelconque des revendications 7 à 13, **caractérisée en ce que** la soupape à visser (11, 70, 80, 90, 100, 110, 120, 130, 140) présente une unité d'actionnement (40) électromagnétique avec un électroaimant (41), qui entoure un tube polaire (42), ledit tube polaire (42) formant la pièce intermédiaire reliée au manchon (13).

15. Soupape à visser selon l'une quelconque des revendications précédentes, **caractérisée en ce que** la soupape à visser (140) comporte une unité d'actionnement électromagnétique (40) avec un tube polaire, sur lequel est maintenu un électroaimant (41), et qui est disposé en pouvant se déplacer et / ou pivoter perpendiculairement par rapport à la direction de vissage de l'élément fileté à visser (30), mais en étant immobile axialement par rapport audit élément fileté à visser (30).
